# EUROPEAN PATENT SPECIFICATION

(11) **EP 3 005 921 B1**
(45) Date of publication and mention of the grant of the patent: **25.04.2018**
(21) Application number: 14804759.0
(22) Date of filing: 26.05.2014
(51) Int. Cl.: A47L 9/22, H02K 5/24

(54) **SUCTION CLEANER WITH MOTOR SUSPENSION STRUCTURE**
STAUBSAUGER MIT EINER MOTORFEDERUNGSSTRUKTUR
ASPIRATEUR DE NETTOYAGE AVEC STRUCTURE DE SUSPENSION DE MOTEUR

(30) Priority: 27.05.2013 CN 201310200292; 27.05.2013 CN 201320293556 U
(43) Date of publication of application: 13.04.2016
(73) Proprietor: Kingclean Electric Co., Ltd., Suzhou, Jiangsu 215009 (CN)
(72) Inventor: NI, Zugen, Suzhou Jiangsu 215009 (CN)
(74) Representative: Gulde & Partner
(86) International application number: PCT/CN2014/078449
(87) International publication number: WO 2014/190888

(56) References cited:
- CN-A- 101 836 844
- CN-A- 102 894 931
- CN-U- 203 328 633
- CN-U- 203 341 651
- CN-Y- 201 378 766
- CN-Y- 201 378 766
- GB-A- 433 850
- US-A1- 2010 266 388

## Description

### FIELD OF THE INVENTION

The present invention relates to a vacuum cleaner having motor suspension structure.

### BACKGROUND OF THE INVENTION

With the motor power of a vacuum cleaner gradually increased, the noise of the vacuum cleaner is also increased. The low-frequency noise of the vacuum cleaner mainly comes from vibration of the motor. In order to reduce the vibration of the motor, in the industry the motor is fixed inside the motor cover with a motor seal ring and a motor pressure seat fixed in the front and rear; however, the motor still has a limited silencing effect, not able to reduce the noise.

Patent document GB 433 850 A is directed to a vacuum cleaner including an intermediate housing enclosing the motor fan unit with the purpose of dumping the noise of the motor.

### CONTENTS OF THE INVENTION

A purpose of the present invention is to provide a vacuum cleaner having motor suspension structure, so as to reduce the noise of the motor by reducing the vibration thereof.

In order to achieve the above purpose, a first technical solution as follows is used in the present invention: A vacuum cleaner having motor suspension structure is provided, which comprises an outer cover, an inner cover fixed to the outer cover, a motor at least partially accommodated within the inner cover and having a head and a tail, and a motor bracket at least partially surrounding the motor and used for fixing the same, with the tail of the motor suspended.

The vacuum cleaner further comprises a first buffer located between the inner cover and the motor bracket, wherein the first buffer is at least partially in the form of a curve surrounding the motor, a second buffer at least partially curved and located between the outer cover and the inner cover, and a third buffer located between the outer cover and the head. The motor bracket comprises at least one pair of brackets engaging each other, with each of the brackets including a curved embracing portion abutting on the outside of the motor, and a supporting portion extending outward from the embracing portion.

Preferably, the first buffer includes a pair of curved sections opposite to each other, and a pair of rectangular sections used for connecting the two curved sections and accommodating the supporting portion.

Preferably, the inner cover includes a pair of curved stands used for supporting the curved sections, and a supporting stand used for supporting the rectangular sections.

Preferably, the inner cover includes a pair of curved stands used for supporting the curved sections, and a supporting stand used for supporting the rectangular sections.

Preferably, the motor bracket is made of rigid plastics, while the first buffer is made of flexible plastics.

Preferably, the first buffer, the second buffer and the third buffer have the same buffering direction in parallel with the axial direction of the motor.

Preferably, the first buffer, the second buffer and the third buffer are all integrally molded with flexible plastics.

The present invention has the following advantages:
The present invention ensures the tail of the motor to be suspended in the air through a separate motor bracket fixed to the motor, and then absorbs a shock through a plurality of buffers, greatly reducing noise of the motor, thus achieving a vacuum cleaner with low noise.

### BRIEF DESCRIPTION OF THE DRAWINGS

The present invention will be further described below with reference to the drawings and examples.
Fig. 1 is an exploded schematic view of the present invention as a whole;
Fig. 2 is a sectional view of the present invention;
Fig. 3 is a schematic view of installation of the motor and the motor bracket of the present invention; and
Fig. 4 is a schematic view of installation of the motor and the motor bracket in Fig. 3 into the inner cover.

Wherein: 1. an outer cover; 2. an inner cover; 20. a curved stand; 22. a supporting stand; 3. a motor; 30. a head; 32. a tail; 4. a motor bracket; 40. an embracing portion; 42. a supporting portion; 5. a first buffer; 50. a curved section; 52. a rectangular section; 6. a second buffer; and 7. a third buffer.

### DETAILED DESCRIPTION OF THE EMBODIMENTS

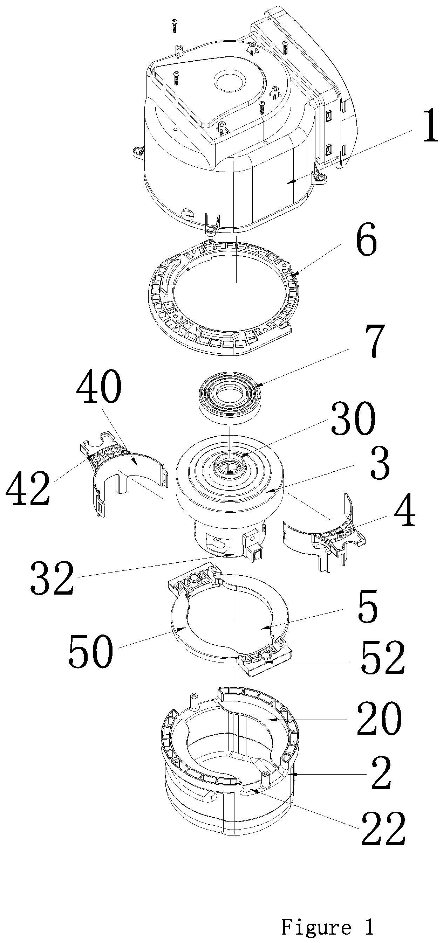

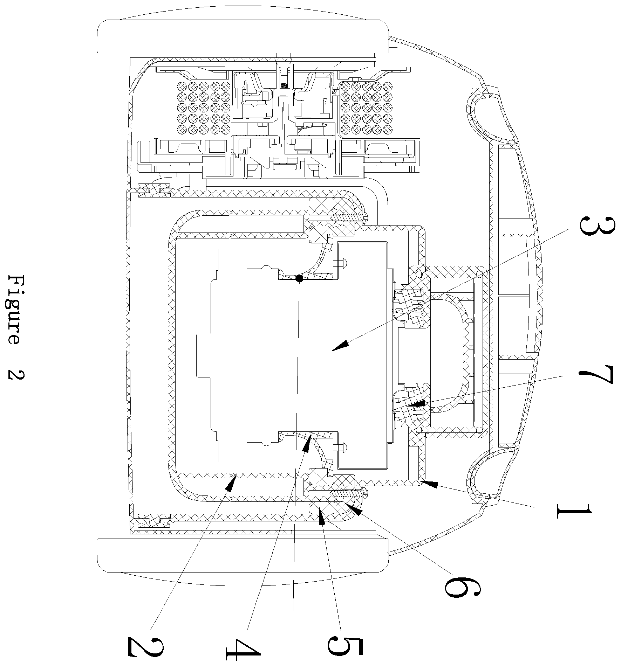

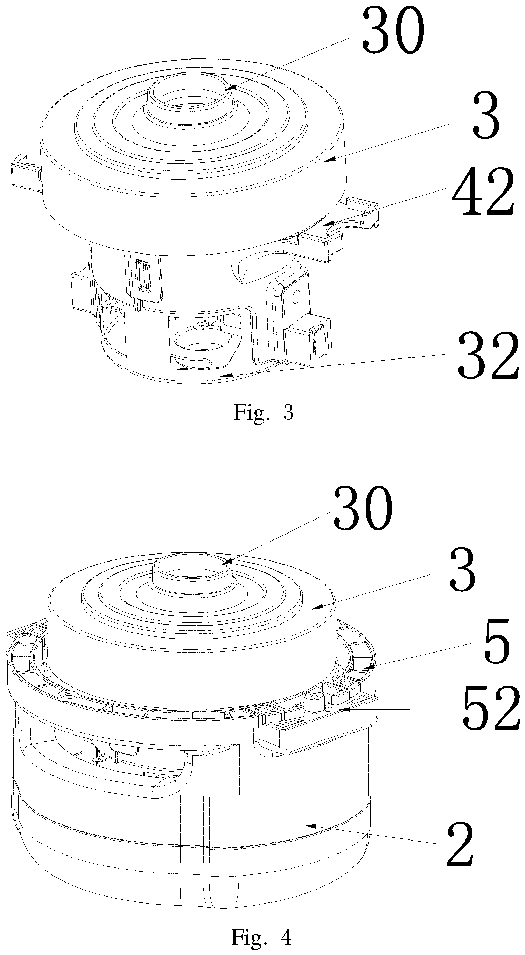

Examples: As shown in Figs. 1-4, the present invention provides a first example of a vacuum cleaner having motor suspension structure, which comprises an outer cover 1, an inner cover 2 fixed to the outer cover 1, a motor 3 at least partially accommodated within the inner cover 2 and having a head 30 and a tail 32, a motor bracket 4 at least partially surrounding the motor 3 and used for fixing the same, a first buffer 5 located between the inner cover 2 and the motor bracket 4 and at least partially in the form of a curve surrounding the motor 3, a second buffer 6 at least partially curved and located between the outer cover 1 and the inner cover 2, and a third buffer 7 located between the outer cover 1 and the head 30, wherein the tail 32 of the motor 3 is suspended, i.e., the tail 32 may be suspended in the horizontal direction of the motor or in the vertical direction of the motor. The head 30 of the motor 3 is larger than the tail 32 in diameter, the head 30 being provided inside with a rotating impeller, the tail 32 being provided inside with a commutator, a brush and other components. The outer cover 1 is opened downward to accommodate the inner cover 2, while the inner cover 2 is opened right oppositely upward to accommodate the motor 3. The first buffer 5 is smaller than the second buffer 6 but larger than the third buffer 7, with the first buffer 5, the second buffer 6 and the third buffer 7 all integrally molded with flexible plastics and having a sealing function. The outer cover 1 is partially closed at one end with an inlet hole allowing air current to enter the motor 3, while it is opened at the other end, with an outer outlet hole provided on the sidewall. The inner cover 2 is opened at one end and closed at the other, with an inner outlet hole provided on the sidewall. Wherein the outer outlet hole and the inner outlet hole are at the opposite sides of the motor 3 at an interval of 180 degrees.

The motor bracket 4 includes at least one pair of brackets engaging each other and embracing the motor 3, with each of brackets including a curved embracing portion 40 abutting on the outside of the motor 3, and a supporting portion 42 extending outward from the embracing portion 40. Wherein the supporting portion 42 at least partially contacts the first buffer 5 in a supporting manner along the axial direction of the motor, while the embracing portion 40 may or may not contact the side of the first buffer 5. The inner cover 2 includes a pair of curved stands 20 used for supporting the curved sections 50, and a supporting stand 22 used for supporting the rectangular sections 52. The motor bracket 4 is located between the head 30 and the tail 32 of the motor 3.

As shown in Figs. 1-4, the present invention provides a second example of a vacuum cleaner having motor suspension structure, which comprises an outer cover 1, an inner cover 2 fixed to the outer cover 1, a motor 3 at least partially accommodated within the inner cover 2 and having a head 30 and a tail 32, and a motor bracket 4 at least partially surrounding the motor 3 and used for fixing the same, wherein the outer cover 1 covers the inner cover 2, the motor bracket 4 is at least partially accommodated within the inner cover 2, and the head 30 of the motor 3 is fixed above the tail 32 in the vertical direction. The head 30 of the motor 3 is larger than the tail 32 in diameter, the head 30 being provided inside with a rotating impeller, the tail 32 being provided inside with a commutator, a brush and other components. The outer cover 1 is opened downward to accommodate the inner cover 2, while the inner cover 2 is opened right oppositely upward to accommodate the motor 3. The first buffer 5 is smaller than the second buffer 6 but larger than the third buffer 7. The outer cover 1 is partially closed at one end with an inlet hole allowing air current to enter the motor 3, while it is opened at the other end, with an outer outlet hole provided on the sidewall. The inner cover 2 is opened at one end and closed at the other, with an inner outlet hole provided on the sidewall. Wherein the outer outlet hole and the inner outlet hole are at the opposite sides of the motor 3 at an interval of 180 degrees.

Preferably, it further comprises a first buffer 5 located between the inner cover 2 and the motor bracket 4 and at least partially in the form of a curve surrounding the motor 3, a second buffer 6 at least partially curved and located between the outer cover 1 and the inner cover 2, and a third buffer 7 located between the outer cover 1 and the head 30. Wherein the first buffer 5 supports the motor bracket 4 in the axial direction of the motor 3. The motor bracket 4 is made of rigid plastics, while the first buffer 5, the second buffer 6 and the third buffer 7 are all integrally molded with flexible plastics and have a sealing function.

The motor bracket 4 comprises at least one pair of brackets engaging each other, with each of brackets including a curved embracing portion 40 abutting on the outside of the motor 3, and a supporting portion 42 extending outward from the embracing portion 40. The inner cover 2 includes a pair of curved stands 20 used for supporting the curved sections 50, and a supporting stand 22 used for supporting the rectangular sections 52. The motor bracket 4 is preferably located between the head 30 and the tail 32 of the motor 3.

As shown in Figs. 1-4, the present invention provides a third example of a vacuum cleaner having motor suspension structure, which comprises an outer cover 1, an inner cover 2 fixed to the outer cover 1, a motor 3 at least partially accommodated within the inner cover 2, a motor bracket 4 at least partially surrounding the motor 3 and used for fixing the same, a first buffer 5 located between the inner cover 2 and the motor bracket 4, a second buffer 6 at least partially curved and located between the outer cover 1 and the inner cover 2, and a third buffer 7 located between the outer cover 1 and the motor 3. Wherein the motor bracket 4 is at least partially accommodated within the inner cover 2, and the first buffer 5, the second buffer 6 and the third buffer 7 have the same buffering direction in parallel with the axial direction of the motor. The motor bracket 4 is made of rigid plastics, while the first buffer 5, the second buffer 6 and the third buffer 7 are all integrally molded with flexible plastics and have a sealing function. The head 30 of the motor 3 is larger than the tail 32 in diameter, the head 30 being provided inside with a rotating impeller, the tail 32 being provided inside with a commutator, a brush and other components. The outer cover 1 is opened downward to accommodate the inner cover 2, while the inner cover 2 is opened right oppositely upward to accommodate the motor 3. The first buffer 5 is smaller than the second buffer 6 but larger than the third buffer 7, with the first buffer 5, the second buffer 6 and the third buffer 7 all integrally molded with flexible plastics and having a sealing function. The outer cover 1 is partially closed at one end with an inlet hole allowing air current to enter the motor 3, while it is opened at the other end, with an outer outlet hole provided on the sidewall. The inner cover 2 is opened at one end and closed at the other, with an inner outlet hole provided on the sidewall. Wherein the outer outlet hole and the inner outlet hole are at the opposite sides of the motor 3 at an interval of 180 degrees.

The motor bracket 4 comprises at least one pair of brackets engaging each other, with each of brackets including a curved embracing portion 40 abutting on the outside of the motor 3, and a supporting portion 42 extending outward from the embracing portion 40. The inner cover 2 includes a pair of curved stands 20 used for supporting the curved sections 50, and a supporting stand 22 used for supporting the rectangular sections 52. The motor bracket 4 is located between the head 30 and the tail 32 of the motor 3, and can also directly abut on the head.

As shown in Figs. 1-4, the present invention provides a fourth example of a vacuum cleaner having motor suspension structure, comprising a motor having a head and a tail, a motor bracket at least partially surrounding the motor and used for fixing the same, a motor cover at least partially accommodating the motor and the motor bracket, and a buffer located between the motor cover and the motor bracket, wherein the head of the motor is located above the tail, which is suspended, i.e., the motor is preferably suspended in the vertical direction so as to get fixed by making full use of cooperation of the motor gravity and the motor bracket. The head of the motor is larger than the tail in diameter, the head being provided inside with a rotating impeller, the tail being provided inside with a commutator, a brush and other components. The motor cover may include a single cover, and may also include an inner cover and an outer cover. The outer cover is opened downward to accommodate the inner cover, while the inner cover is opened right oppositely upward to accommodate the motor. The outer cover is partially closed at one end with an inlet hole allowing air current to enter the motor, while it is opened at the other end, with an outer outlet hole provided on the sidewall. The inner cover is opened at one end and closed at the other, with an inner outlet hole provided on the sidewall. Wherein the outer outlet hole and the inner outlet hole are at the opposite sides of the motor at an interval of 180 degrees.

The buffer comprises a first buffer located between the inner cover and the motor bracket, a second buffer at least partially curved and located between the outer cover and the inner cover, and a third buffer located between the outer cover and the head. Wherein the first buffer, the second buffer and the third buffer have the same buffering direction in parallel with the axial direction of the motor. The motor bracket is made of rigid plastics, while the first buffer, the second buffer and the third buffer are all integrally molded with flexible plastics and have a sealing function. The first buffer is smaller than the second buffer but larger than the third buffer.

The motor bracket comprises at least one pair of brackets engaging each other, with each of brackets including a curved embracing portion abutting on the outside of the motor, and a supporting portion extending outward from the embracing portion. The motor bracket is located between the head and the tail of the motor.

The first buffer includes a pair of curved sections opposite to each other, and a pair of rectangular sections used for connecting the two curved sections and accommodating the supporting portion.

The inner cover includes a pair of curved stands used for supporting the curved sections, and a supporting stand used for supporting the rectangular sections.

As shown in Figs. 1-4, the present invention provides a fifth example of a vacuum cleaner having motor suspension structure, which comprises an outer cover 1, an inner cover 2 fixed to the outer cover 1, a motor 3 at least partially accommodated within the inner cover 2 and having a head and a tail, a motor bracket 4 at least partially surrounding the motor 3 and used for fixing the same, and a first buffer 5 arranged on the inner cover 2 and surrounding the motor 3, wherein the motor bracket 4 is provided with a supporting portion 42 extending away from the center of the motor 3 and abutting on at least a part of the first buffer 5, and the head of the motor 3 is located above the supporting portion 42, while the tail of the motor 3 is separated from the inner sidewall of the inner cover 2. Wherein the first buffer 5, the second buffer 6 and the third buffer 7 have the same buffering direction in parallel with the axial direction of the motor. The motor bracket 4 is made of rigid plastics, while the first buffer 5, the second buffer 6 and the third buffer 7 are all integrally molded with flexible plastics and have a sealing function. The head 30 of the motor 3 is larger than the tail 32 in diameter, the head 30 being provided inside with a rotating impeller, the tail 32 being provided inside with a commutator, a brush and other components. The outer cover 1 is opened downward to accommodate the inner cover 2, while the inner cover 2 is opened right oppositely upward to accommodate the motor 3. The first buffer 5 is smaller than the second buffer 6 but larger than the third buffer 7. The outer cover 1 is partially closed at one end with an inlet hole allowing air current to enter the motor 3, while it is opened at the other end, with an outer outlet hole provided on the sidewall. The inner cover 2 is opened at one end and closed at the other, with an inner outlet hole provided on the sidewall. Wherein the outer outlet hole and the inner outlet hole are at the opposite sides of the motor 3 at an interval of 180 degrees.

The motor bracket 4 comprises at least one pair of brackets engaging each other, with each of brackets including a curved embracing portion 40 abutting on the outside of the motor 3, and a supporting portion 42 extending outward from the embracing portion 40. The inner cover 2 includes a pair of curved stands 20 used for supporting the curved sections 50, and a supporting stand 22 used for supporting the rectangular sections 52. The motor bracket 4 is located between the head 30 and the tail 32 of the motor 3, and can also directly abut on the head.

As shown in Figs. 1-4, the present invention provides a sixth example of a vacuum cleaner having motor suspension structure, which comprises an outer cover 1, an inner cover 2 fixed to the outer cover 1, a motor 3 at least partially accommodated within the inner cover 2 and having a head 30 and a tail 32, a motor bracket 4 at least partially surrounding the motor 3 and used for fixing the same, and a first buffer 5 located between the inner cover 2 and the motor bracket 4, wherein the first buffer 5 supports the motor bracket 4 in the axial direction of the motor 3, and the tail 32 of the motor 3 is suspended. The head 30 of the motor 3 is larger than the tail 32 in diameter, the head 30 being provided inside with a rotating impeller, the tail 32 being provided inside with a commutator, a brush and other components. The outer cover 1 is opened downward to accommodate the inner cover 2, while the inner cover 2 is opened right oppositely upward to accommodate the motor 3. The first buffer 5 is smaller than the second buffer 6 but larger than the third buffer 7. The outer cover 1 is partially closed at one end with an inlet hole allowing air current to enter the motor 3, while it is opened at the other end, with an outer outlet hole provided on the sidewall. The inner cover 2 is opened at one end and closed at the other, with an inner outlet hole provided on the sidewall. Wherein the outer outlet hole and the inner outlet hole are at the opposite sides of the motor 3 at an interval of 180 degrees.

Preferably, it further comprises a second buffer 6 at least partially curved and located between the outer cover 1 and the inner cover 2, and a third buffer 7 located between the outer cover 1 and the head 30.

Preferably, the motor bracket 4 comprises at least one pair of brackets engaging each other, with each of brackets including a curved embracing portion 40 abutting on the outside of the motor 3, and a supporting portion 42 extending outward from the embracing portion 40.

Preferably, the first buffer includes a pair of curved sections 50 opposite to each other, and a pair of rectangular sections 52 used for connecting the two curved sections 50 and accommodating the supporting portion 42.

Preferably, the inner cover 2 includes a pair of curved stands 20 used for supporting the curved sections 50, and a supporting stand 22 used for supporting the rectangular sections 52.

Preferably, the motor bracket 4 is made of rigid plastics, while the first buffer 5 is made of flexible plastics.

As shown in Figs. 1-4, the present invention provides a seventh example of a vacuum cleaner having motor suspension structure, which comprises an outer cover 1, an inner cover 2 fixed to the outer cover 1, a motor 3 at least partially accommodated within the inner cover 2, a motor bracket 4 at least partially surrounding the motor 3 and used for fixing the same, a first buffer 5 located between the inner cover 2 and the motor bracket 4, a second buffer 6 at least partially curved and located between the outer cover 1 and the inner cover 2, and a third buffer 7 located between the outer cover 1 and the motor 3, with the tail 32 of the motor 3 suspended. The head 30 of the motor 3 is larger than the tail 32 in diameter, the head 30 being provided inside with a rotating impeller, the tail 32 being provided inside with a commutator, a brush and other components. The outer cover 1 is opened downward to accommodate the inner cover 2, while the inner cover 2 is opened right oppositely upward to accommodate the motor 3. The first buffer 5 is smaller than the second buffer 6 but larger than the third buffer 7. The outer cover 1 is partially closed at one end with an inlet hole allowing air current to enter the motor 3, while it is opened at the other end, with an outer outlet hole provided on the sidewall. The inner cover 2 is opened at one end and closed at the other, with an inner outlet hole provided on the sidewall. Wherein the outer outlet hole and the inner outlet hole are at the opposite sides of the motor 3 at an interval of 180 degrees.

Preferably, the first buffer 5, the second buffer 6 and the third buffer 7 have the same buffering direction in parallel with the axial direction of the motor.

Preferably, the first buffer 5, the second buffer 6 and the third buffer 7 are all integrally molded with flexible plastics.

The present invention ensures the tail of the motor to be suspended in the air through a separate motor bracket fixed to the motor, and then absorbs a shock through a plurality of buffers, greatly reducing noise of the motor, thus achieving a vacuum cleaner with low noise.

Of course, the above examples are used only for explaining technical concept and characteristics of the present invention. They are provided to make those skilled in the art understand the present invention and implement it, rather than limit the scope of protection of the present invention. Any equivalent alteration or modification made according to the spiritual essence of the primary technical solution of the present invention should fall within the scope of protection of the present invention.

## Claims

1. A vacuum cleaner having a motor suspension structure, comprising: an outer cover (1), an inner cover (2) fixed to the outer cover (1), a motor (3) at least partially accommodated within the inner cover (2) and having a head (30) and a tail (32), and a motor bracket (4) at least partially surrounding the motor (3) and used for fixing the same, wherein the tail (32) of the motor (3) is suspended, and
**characterized in that**
it further comprises a first buffer (5) located between the inner cover (2) and the motor bracket (4), a second buffer (6) at least partially curved and located between the outer cover (1) and the inner cover (2), and a third buffer (7) located between the outer cover (1) and the head (30), wherein the first buffer (5) is at least partially in the form of a curve surrounding the motor (3); and
wherein the motor bracket (4) comprises at least one pair of brackets engaging each other, with each of brackets including a curved embracing portion (40) abutting on the outside of the motor (3), and a supporting portion (42) extending outward from the embracing portion (40).

2. The vacuum cleaner having a motor suspension structure according to claim 1, **characterized in that**: the first buffer (5) includes a pair of curved sections (50) opposite to each other, and a pair of rectangular sections (52) used for connecting the two curved sections (50) and accommodating the supporting portion (42), the inner cover (2) includes a pair of curved stands (20) used for supporting the curved sections (50), and a supporting stand (22) used for supporting the rectangular sections (52).

3. The vacuum cleaner having a motor suspension structure according to one of the preceding claims, **characterized in that**: the motor bracket (4) is made of rigid plastics, while the first buffer (5) is made of flexible plastics.

4. The vacuum cleaner having a suspension structure according to one of the preceding claims, **characterized in that**: the first buffer (5), the second buffer (6) and the third buffer (7) have the same buffering direction in parallel with the axial direction of the motor, and wherein the first buffer (5), the second buffer (6) and the third buffer (7) are all integrally molded with flexible plastics.

## Patentansprüche

1. Ein Staubsauger mit einer Motorfederungsstruktur, aufweisend: eine äußere Abdeckung (1), eine innere Abdeckung (2), die an der äußeren Abdeckung (1) befestigt ist, einen Motor (3), der zumindest teilweise in der inneren Abdeckung (2) aufgenommen ist und einen Kopf (30) und einen hinteren Teil (32) aufweist, und eine Motorhalterung (4), die den Motor (3) zumindest teilweise umgibt und zum Befestigen desselben verwendet wird, wobei der hintere Teil (32) des Motors (3) aufgehängt ist, und
**dadurch gekennzeichnet, dass**
der Staubsauger ferner einen ersten Puffer (5), der zwischen der inneren Abdeckung (2) und der Motorhalterung (4) angeordnet ist, einen zweiten Puffer (6), der zumindest teilweise gekrümmt und zwischen der äußeren Abdeckung (1) und der inneren Abdeckung (2) angeordnet ist, und einen dritten Puffer (7), der zwischen der äußeren Abdeckung (1) und dem Kopf (30) angeordnet ist, aufweist, wobei der erste Puffer (5) zumindest teilweise die Form einer Kurve, die den Motor (3) umgibt, aufweist; und
wobei die Motorhalterung (5) zumindest ein Paar Halterungen, die miteinander in Eingriff stehen, wobei jede der Halterungen einen gekrümmten Umgreifungsabschnitt (40), der an der Außenseite des Motors (3) anliegt, aufweist, und einen Tragabschnitt (42), der sich vom Umgreifungsabschnitt (40) nach außen erstreckt, aufweist.

2. Der Staubsauger mit einer Motorfederungsstruktur nach Anspruch 1,
**dadurch gekennzeichnet, dass**: der erste Puffer (5) ein Paar gekrümmter Abschnitte (50), die einander gegenüberliegen, und ein Paar rechteckiger Abschnitte (52), die zum Verbinden der zwei gekrümmten Abschnitte (50) verwendet werden und den Tragabschnitt (42) aufnehmen, aufweist, wobei die innere Abdeckung (2) ein Paar gekrümmter Ständer (20), die zum Tragen der gekrümmten Abschnitte (50) verwendet werden, und eine Tragvorrichtung (22), die zum Tragen der rechteckigen Abschnitte (52) wird, aufweist.

3. Der Staubsauger mit einer Motorfederungsstruktur nach einem der vorhergehenden Ansprüche, **dadurch gekennzeichnet, dass**: die Motorhalterung (4) aus starrem Kunststoff hergestellt ist, während der erste Puffer (5) aus flexiblem Kunststoff hergestellt ist.

4. Der Staubsauger mit einer Federungsstruktur nach einem der vorhergehenden Ansprüche, **dadurch gekennzeichnet, dass**: der erste Puffer (5), der zweite Puffer (6) und der dritte Puffer (7) dieselbe Pufferrichtung parallel zur Achsenrichtung des Motors aufweisen, und wobei der erste Puffer (5), der zweite Puffer (6) und der dritte Puffer (7) alle einstückig mit flexiblem Kunststoff geformt sind.

## Revendications

1. Un aspirateur de nettoyage ayant une structure de suspension de moteur, comprenant: un capot extérieur (1), un capot intérieur (2) fixé au capot extérieur (1), un moteur (3) qui est au moins partiellement logé dans le capot intérieur (2) et qui possède une tête (30) et une partie arrière (32), et un support de moteur (4) qui entoure au moins partiellement le moteur (3) et qui est utilisé pour fixer celui-ci, la partie arrière (32) du moteur (3) étant suspendue, et
**caractérisé en ce que**
l'aspirateur comprend en outre un premier tampon (5) situé entre le capot intérieur (2) et le support de moteur (4), un deuxième tampon (6) qui est au moins partiellement courbé et situé entre le capot extérieur (1) et le capot intérieur (2), et un troisième tampon (7) situé entre le capot extérieur (1) et la tête (30), le premier tampon (5) se présentant au moins partiellement sous la forme d'une courbe entourant le moteur (3) ; et
le support de moteur (4) comprenant au moins une paire de crochets étant en prise l'un avec l'autre, chacun des crochets comprenant une partie d'étreinte (40) courbée venant en butée sur le côté extérieur du moteur (3), et une partie de support (42) s'étendant vers l'extérieur depuis la partie d'étreinte (40).

2. L'aspirateur de nettoyage ayant une structure de suspension de moteur selon la revendication 1, **caractérisé en ce que** : le premier tampon (5) comprend une paire de sections courbées (50) opposées l'une à l'autre, et une paire de sections rectangulaires (52) utilisées pour relier les deux sections courbées (50) et recevant la partie de support (42), le capot intérieur (2) comprenant une paire de bâtis courbés (20) utilisés pour supporter les sections courbées (50), et un bâti de support (22) utilisé pour supporter les sections rectangulaires (52).

3. L'aspirateur de nettoyage ayant une structure de suspension de moteur selon l'une des revendications précédentes, **caractérisé en ce que** : le support de moteur (4) est réalisé en plastique rigide alors que le premier tampon (5) est réalisé en plastique souple.

4. L'aspirateur de nettoyage ayant une structure de suspension selon l'une des revendications précédentes, **caractérisé en ce que** : le premier tampon (5), le deuxième tampon (6) et le troisième tampon (7) ont la même direction d'amortissement en parallèle à la direction axiale du moteur, et le premier tampon (5), le deuxième tampon (6) et le troisième tampon (7) étant tous intégralement moulés en plastique souple.
